## Europäisches Patentamt

(19) **European Patent Office**

**Office européen des brevets**

(11) Numéro de publication: **0 179 961**
**B1**

(12) **FASCICULE DE BREVET EUROPÉEN**

(45) Date de publication du fascicule du brevet:
**16.03.88**

(21) Numéro de dépôt: **84402195.6**

(22) Date de dépôt: **31.10.84**

(51) Int. Cl.⁴: **B 66 D 3/02,** F 16 G 11/04

---

(54) **Bloc de traction pour treuil linéaire.**

---

(43) Date de publication de la demande:
**07.05.86 Bulletin 86/19**

(45) Mention de la délivrance du brevet:
**16.03.88 Bulletin 88/11**

(84) Etats contractants désignés:
**AT BE CH DE GB IT LI LU NL SE**

(56) Documents cité:
**EP-A-0 057 622**
**FR-A-2 343 168**
**US-A-1 513 313**
**US-A-1 562 469**
**US-A-1 637 270**
**US-A-1 709 570**
**US-A-2 146 575**
**US-A-2 958 916**
**US-A-4 381 584**

(73) Titulaire: **KLEY- FRANCE, Société Anonyme dite:,**
**74, Avenue Pablo Picasso, F-92000 Nanterre (FR)**

(72) Inventeur: **Robert, Brieuc, 26 rue Zilina, F-92000**
**Nanterre (FR)**

(74) Mandataire: **Lefebure, Gérard, Office Blétry 2,**
**boulevard de Strasbourg, F-75010 Paris (FR)**

---

LIBER, STOCKHOLM 1988

## Description

La présente invention concerne un bloc de traction pour treuil linéaire, du type comprenant un châssis allongé à section transversale en forme de U ayant une âme plane et deux ailes latérales espacées et perpendiculaires à l'âme, deux blocs de serrage de forme allongée, qui sont montés mobiles entre les ailes latérales du châssis de telle façon qu'un mouvement relatif longitudinal entre chaque bloc mobile de serrage et l'aile adjacente du châssis provoque un mouvement transversal du bloc mobile considéré, et un couvercle plat parallèle à l'âme du châssis et fixé à celui-ci de manière détachable.

Les treuils linéaires sont des appareils bien connus permettant d'exercer une traction sur un câble, une barre ou autre organe de traction, par exemple pour déplacer une lourde charge horizontalement ou verticalement. Un treuil linéaire comporte habituellement deux blocs de traction qui serrent alternativement le câble, un premier des deux blocs de traction étant utilisé pour tirer le câble pendant que celui-ci glisse entre les blocs de serrage du second bloc de traction et ce dernier étant utilisé pour retenir le câble pendant que le premier bloc de traction est ramené à sa position de départ.

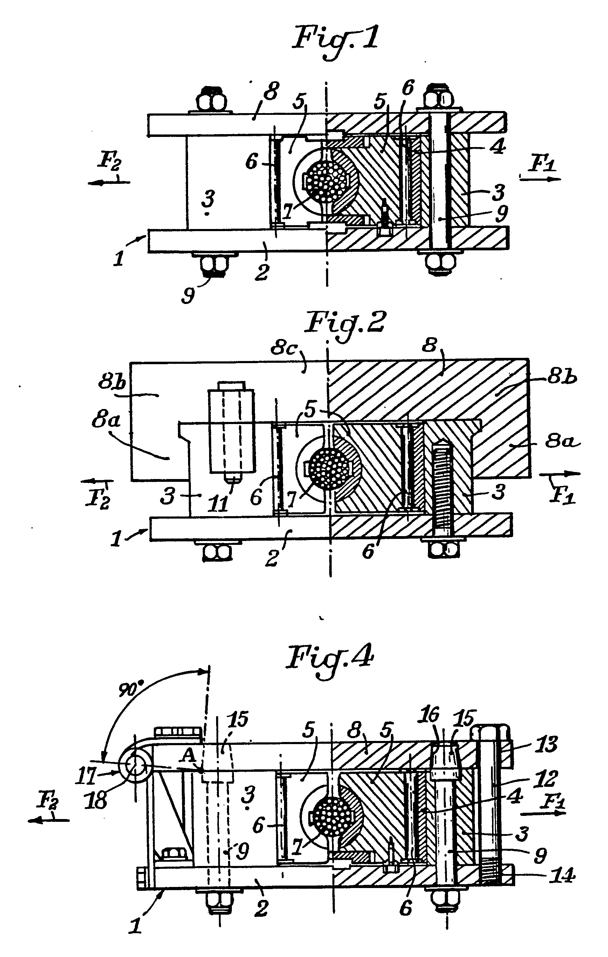

Dans les blocs de traction antérieurement fabriqués par la demanderesse (EP-A-57 622), et dont une forme d'exécution est représentée sur la figure 1 des dessins annexés, l'âme 2 du châssis 1 est constituée par une plaque métallique et les ailes 3 du châssis sont constituées par des blocs d'appui. Chaque bloc d'appui 3 comporte sur sa face intérieure un chemin de roulement 4 sur lequel l'un des deux blocs mobiles de serrage 5 peut rouler par l'intermédiaire de plusieurs galets 6. Chaque chemin de roulement 4 fait un angle avec l'axe longitudinal du bloc de traction, c'est-à-dire avec l'axe longitudinal du câble, de la barre ou autre organe de traction 7 sur lequel le bloc de traction est destiné à agir, les chemins de roulement 4 des deux blocs d'appui 3 convergeant vers l'une des deux extrémités du bloc de traction et chaque bloc mobile de serrage 5 ayant la forme d'un coin dont l'angle est égal à l'angle formé entre le chemin de roulement 4 adjacent et l'axe longitudinal du bloc de traction. Le couvercle 8 est formé par une plaque semblable à la plaque 2 du châssis 1. La plaque 2, les deux bloc d'appui 3 et la plaque-couvercle 8 sont maintenus assemblés par deux séries de goujons 9, les goujons 9 de l'une des deux séries passant à travers des trous prévus dans l'un des deux blocs d'appui 3, tandis que les goujons 9 de l'autre série passent à travers des trous prévus dans l'autre bloc d'appui 3 (un seul goujon de chaque série est visible dans la figure 1).

En service, lorsque les blocs mobiles de serrage 5 serrent le câble 7, chacun des deux blocs d'appui 3 est soumis, par réaction, à un effort très important orienté dans le sens de la flèche $F_1$ ou dans le sens de la flèche $F_2$ selon le bloc d'appui 3 considéré. A titre d'exemple, si la pente de chaque chemin de roulement 4 est de 10 %, chaque bloc d'appui 3 est soumis à un effort qui est égal à environ cinq fois la force de traction du treuil linéaire, soit par exemple 300 tonnes pour une force de traction de 60 tonnes. En plus de leur rôle d'assemblage, les goujons 9 doivent donc être capables de résister à un effort transversal aussi important. C'est pourquoi, dans la forme d'exécution représentée sur la figure 1, à chaque bloc d'appui 3 est associé un nombre relativement important de goujons d'assemblage 9, habituellement six à dix goujons selon la puissance du treuil linéaire, soit au total douze à vingt goujons pour chaque bloc de traction.

Or, il est souhaitable que, en service, le couvercle 8 de chacun des deux blocs de traction du treuil linéaire puisse être facilement et rapidement démonté afin qu'on puisse retirer ou écarter suffisamment les blocs mobiles de serrage pour permettre la mise en place des blocs de traction du treuil linéaire en un point quelconque du câble 7 sans avoir à enfiler une grande longueur de ce dernier entre les blocs mobiles de serrage 5. Cela est également le cas lorsque le câble 7 est composé de deux ou plusieurs tronçons de câble raccordés bout à bout par des organes de jonction et que l'on désire faire passer un organe de jonction à travers l'un des deux blocs de traction pendant que le câble est maintenu sous tension par l'autre bloc de traction.

Il est clair que, dans le cas de la forme d'exécution représentée sur la figure 1, pour pouvoir enlever le couvercle 8, il faut dévisser tous les goujons 9, usuellement douze à vingt goujons, ce qui complique le démontage du couvercle 8.

Sur la figure 2 des dessins annexés, on a représenté une autre forme d'exécution d'un bloc de traction antérieurement connu. Dans la figure 2, les éléments qui sont identiques ou qui jouent le même rôle que dans la figure 1 sont désignés par les mêmes numéros de référence. Dans la forme d'exécution représentée sur la figure 2, le couvercle 8 est réalisé sous la forme d'une pièce massive qui peut coulisser dans le sens longitudinal par rapport aux blocs d'appui 3 du châssis 1. Une ou plusieurs chevilles 11 empêchent, en service, le couvercle 8 de glisser par rapport aux blocs d'appui 3. En service, la ou les chevilles 11 ne supportent aucun effort transversal. A la limite, une seule cheville suffirait pour immobiliser le couvercle 8 par rapport aux blocs d'appui 3. Dans la forme d'exécution de la figure 2, le couvercle 8 est facilement et rapidement démontable puisqu'il suffit de retirer une ou un petit nombre de chevilles 11 et de faire coulisser longitudinalement le couvercle 8 par rapport aux blocs d'appui 3. Toutefois, dans cette forme d'exécution, les efforts transversaux (orientés suivant les flèches $F_1$ et $F_2$) qui, en service, sont appliqués par réaction aux blocs d'appui 3, sont absorbés par les rebords latéraux 8a du couvercle 8. Il en résulte que les zones de jonction 8b entre les rebords latéraux 8a et la partie 8c du couvercle 8 sont soumises à des moments de flexion très importants. En conséquence, le couvercle 8 doit être réalisé sous la forme d'une pièce épaisse et massive. A titre de comparaison, pour un treuil linéaire ayant une force de traction de 60 tonnes, le couvercle 8 du bloc de traction de la figure 2 a une épaisseur de 90 mm et un poids d'environ 280 kg, tandis que le couvercle 8 du bloc de traction de la figure 1 a une épaisseur d'environ 40 mm et un poids d'environ 95 kg.

La présente invention a pour but de fournir un bloc de traction dont le couvercle soit facilement et rapidement démontable, tout en ayant un épaisseur et un poids du même ordre de grandeur que celui du bloc de traction représenté sur la figure 1.

A cet effet, le bloc de traction selon la présente invention est caractérisé en ce que les ailes latérales du châssis sont pourvues de tenons qui font saillie sur leurs faces d'extrémité orientées vers le couvercle et qui sont emboîtés étroitement dans des cavités correspondantes du couvercle.

Ainsi, les efforts transversaux susmentionnés sont absorbés non plus par des goujons d'assemblage, mais par les tenons, de sorte qu'il suffit d'un petit nombre de vis pour assembler le couvercle au châssis.

Suivant une forme d'exécution avantageuse de la présente invention, le couvercle peut être monté pivotant par rapport au châssis. Dans ce cas, les tenons et les cavités du couvercle sont coniques pour permettre l'emboîtement des tenons dans les cavités du couvercle lors de la fermeture de celui-ci et le désemboîtement des tenons lors de l'ouverture du couvercle.

L'invention sera mieux comprise à la lecture de la description qui va suivre et qui est donnée en référence aux dessins annexés sur lesquels :

La figure 1 montre, moitié en vue d'extrémité, moitié en coupe transversale, un bloc de traction connu.

La figure 2 est une vue similaire de la figure 1 montrant un autre bloc de traction connu.

La figure 3 est une vue en perspective montrant le bloc de traction de la présente invention, son couvercle étant en position ouverte.

La figure 4 est une vue semblable aux figures 1 et 2, montrant le bloc de traction de la figure 3, couvercle fermé.

Les blocs de traction représentés sur les figures 1 et 2 ne seront pas à nouveau décrits en détail, puisqu'ils ont déjà été décrits plus haut.

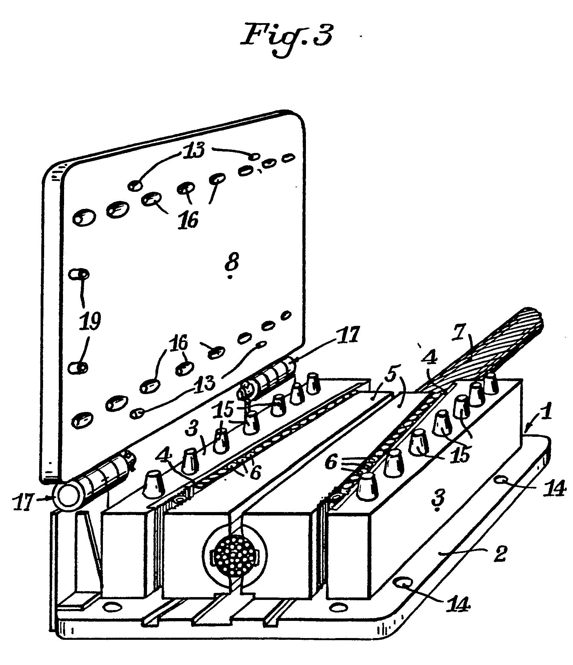

Le bloc de traction représenté sur les figure 3 et 4 comprend, comme le bloc de traction de la figure 1, un châssis 1 à section transversale en forme de U, composé d'une plaque 2 et de deux blocs d'appui 3 entre lesquels se trouvent deux blocs mobiles de serrage 5 en forme de coin. Chaque bloc de serrage 5 peut rouler sur un chemin de roulement 4 du bloc d'appui 3 adjacent par l'intermédiaire d'une série de galets ou rouleaux 6. Les chemins de roulement 4 des deux blocs d'appui 3 convergent vers une extrémite du bloc de traction, de telle sorte qu'un mouvement longitudinal du châssis 1 dans un sens provoque un mouvement transversal des blocs de serrage 5 l'un vers l'autre pour serrer le câble ou autre organe de traction 7, permettant ainsi d'exercer une traction sur ce dernier, tandis qu'un mouvement longitudinal du châssis 1 dans le sens opposé provoque un relâchement de l'effort de serrage sur les blocs 5 et sur le câble 7.

Dans le bloc de traction représenté sur les figures 3 et 4, comme dans le bloc de traction représenté sur la figure 1, le châssis 1 est complété par un couvercle 8 qui contribue à la rigidité mécanique du châssis 1, en particulier pour résister aux efforts transversaux qui s'exercent par réaction, pendant le serrage, sur les blocs d'appui 3 comme indiqué par les flèches $F_1$ et $F_2$ dans la figure 4.

A la différence du bloc de traction de la figure 1, les goujons 9 du bloc de traction de la figure 4 ne servent pas à la fixation du couvercle 8 au châssis 1, cette fixation étant assurée par quatre vis 12 qui passent librement, avec un certain jeu, à travers des trous 13 du couvercle 8, à l'extérieur des deux blocs d'appui 3, et qui sont vissées dans des trous taraudés 14 de la plaque 2 du châssis 1. Les goujons 9 servent uniquement à fixer les blocs d'appui 3 à la plaque 2 du châssis.

Comme cela est plus particulièrement visible sur la figure 3, chaque bloc d'appui 3 comporte une série de tenons 15 qui font saillie sur sa face d'extrémité orientée vers le couvercle 8 et qui sont emboîtés étroitement dans des cavités correspondantes 16 du couvercle. De cette manière, les efforts transversaux appliqués aux blocs d'appui 3 pendant le serrage sont transmis au couvercle 8 par les tenons 15, sans que ces efforts transversaux soient appliqués aux vis 12 qui assurent uniquement la fixation du couvercle au châssis 1. Le nombre et la section transversale des tenons 15 sont bien entendu choisis pour pouvoir résister aux efforts transversaux susmentionnés. Le nombre des tenons 15 peut être égal au nombre des goujons 9 et ils peuvent être avantageusement constitués par les têtes des goujons 9, celles-ci étant alors agencées pour faire saillie au delà de la face d'extrémité des blocs d'appui 3 orientée vers le couvercle 8. Puisque les vis 12 n'ont plus à supporter les efforts transversaux auxquels sont soumis les blocs d'appui 3, leur nombre peut être nettement plus petit que le nombre des goujons 9, par exemple quatre vis 12. Ainsi, le couvercle 8 peut être facilement et rapidement démonté simplement en dévissant les vis 12 et en soulevant le couvercle 8 de manière à le dégager des goujons 15.

Comme montré dans les figures 3 et 4, le couvercle 8 peut être avantageusement monté pivotant sur le châssis 1 au moyen de deux charnières 17 situées d'un côté du bloc de traction. Dans ce cas, pour permettre l'emboîtement et le déboîtement des tenons 15 dans et hors des cavités 16 du couvercle, les tenons 15 et les cavités 16 ont une forme conique et l'axe 18 des charnières 17 se trouve dans un plan qui passe par le point A à la base du tenon conique 15 le plus proche de la charnière 17 et qui est perpendiculaire à la génératrice de ce tenon conique passant par le point A comme montré sur la figure 4.

Deux butées 19 (figure 3) font saillie sur la face inférieure du couvercle 8 pour empêcher, lorsque le couvercle est fermé en service, que les blocs de serrage 5 puisse sortir du bloc de traction.

Il est bien entendu que la forme d'exécution de la présente invention qui a été décrite ci-dessus a été donnée à titre d'exemple purement indicatif et nullement limitatif, et que de nombreuses modifications peuvent être facilement emportées par l'homme de l'art sans pouvant en sortir du cadre de la présente invention comme revendiquée. C'est ainsi notamment que les tenons 15 peuvent être constitués par des éléments distincts des goujons 9, les tenons 15 étant alors fixés d'un côté des blocs d'appui 3 et les goujons 9 étant alors remplacés par des vis qui sont vissées dans les trous taraudés prévus de l'autre côté des blocs d'appui 3. En outre, les blocs d'appui 3 et la plaque 2 du châssis 1 peuvent être réalisés sous la forme d'une pièce monobloc moulée. Bien entendu, dans ce cas, il n'y a plus de goujons 9 et les tenons 15 peuvent être soit constitués par des éléments rapportés sur la pièce monobloc moulée, soit formés d'un seul tenant, par moulage, avec la pièce monobloc moulée. En outre, au lieu de prévoir des galets 6 entre les blocs de serrage 5 et les blocs d'appui 3, les blocs de serrage 5 pourraient être simplement en contact glissant avec les blocs d'appui 3 ou chaque bloc de serrage 5 pourrait être relié au bloc d'appui 3 adjacent par une série de biellettes parallèles entre elles. En outre, étant donné que les vis 12 assurant la fixation détachable du couvercle 8 au châssis 1 ne supportent pas les efforts transversaux qui, pendant le serrage, sont appliqués aux blocs d'appui 3 du châssis 1, elles peuvent être remplacées par tout autres moyens de fixation détachables, tels que par exemple des attaches à ouverture et à fermeture rapides.

**Revendications**

1. Bloc de traction pour treuil linéaire, comprenant un châssis allongé (1) à section transversale en forme de U ayant une âme plane (2) et deux ailes latérales (3) espacées et perpendiculaires à l'âme, deux blocs de serrage (5) de forme allongée, qui sont montés mobiles entre les ailes latérales du châssis de telle façon qu'un mouvement relatif longitudinal entre chaque bloc mobile de serrage et l'aile adjacente du châssis provoque un mouvement du bloc de serrage considéré dans une direction transversale perpendiculaire aux ailes pour serrer ou desserrer, selon le sens dudit mouvement relatif longitudinal, un câble, une barre ou autre organe de traction (7), un couvercle plat (8) parallèle à l'âme (2) du châssis et des moyens de fixation (12) pour fixer de manière détachable le couvercle (8) au châssis (1), lesdites ailes latérales (3) du châssis étant soumises à des forces transversales de réaction qui tendent à les écarter l'une de l'autre et qui sont transmises au couvercle quand, en fonctionnement, les blocs de serrage (5) serrent ledit organe de traction (7), caractérisé en ce que les ailes latérales (3) du châssis (1) sont pourvues de tenons (15) qui font saillie sur leurs faces d'extrémité orientées vers le couvercle (8) perpendiculairement à celui-ci et qui sont emboîtés étroitement dans des cavités correspondantes (16) du couvercle, lesdites forces transversales de réaction étant ainsi transmises au couvercle (8) par l'intermédiaire desdits tenons (15), tandis que les moyens de fixation (12) ne sont pratiquement soumis à aucune contrainte due auxdites forces transversales de réaction.

2. Bloc de traction selon la revendication 1, caractérisé en ce que les tenons (15) et les cavités (16) du couvercle (8) sont coniques et en ce que le couvercle est articulé par rapport au châssis (1).

3. Bloc de traction selon la revendication 1 ou 2, dans lequel l'âme (2) du châssis (1) est constituée par une plaque et les ailes latérales (3) du châssis sont constituées par deux blocs d'appui, caractérisé en ce que les blocs d'appui (3) sont fixés à la plaque (2) du châssis (1) par des goujons (9), qui sont distincts des moyens de fixation (12) fixant le couvercle (8) au châssis (1).

4. Bloc de traction selon la revendication 3, caractérisé en ce que les tenons (15) sont formés par les têtes des goujons (9) de fixation des blocs d'appui (3) à la plaque (2) du châssis (1).

**Patentansprüche**

Zugblock für eine Linearwinde, bestehend aus einem länglichen Gehäuse (1) mit U-förmigem Querschnitt aus einer flachen Grundplatte (2) und zwei seitlichen Schenkeln (3), die im Abstand zueinander und senkrecht zu der Grundplatte angeordnet sind, zwei länglichen Feststellblöcken (5), die beweglich zwischen die seitlichen Schenkel (3) des Gehäuses derart eingesetzt sind, daß eine relative Längsbewegung zwischen jedem Feststellblock und dem benachbarten Schenkel des Gehäuses eine Bewegung des Feststellblockes bezüglich der Querrichtung senkrecht zu den Schenkeln zum Feststellen oder Lösen entsprechend der relativen Längsbewegung zur Folge hat, einem Seil, einer Stange oder einem anderen Zugelement (7), einem flachen Deckel (8), der parallel zur Grundplatte (2) des Gehäuses angeordnet ist und Befestigungsvorrichtungen (12) zur lösbaren Befestigung des Deckels (8) am Gehäuse (11), wobei die seitlichen Schenkel (3) des Gehäuses den in Querrichtung resultierenden Kräften unterworfen sind, die dazu neigen, die seitlichen Schenkel zueinander zu drücken und die auf den Deckel übertragen werden, wenn die Feststellblöcke wärend des Betriebes die Zugelemente (7) feststellen, <u>dadurch gekennzeichnet</u>, daß die seitlichen Schenkel (3) des Gehäuses (1) mit Zapfen (15) versehen sind, die senkrecht zum Deckel (8) über die äußeren, dem Deckel zugewandten Flächen der seitlichen Schenkel (3) vorstehen und die sich in entsprechende Aussparungen (16) des Deckels passend einfügen, wobei die resultierenden Querkräfte durch die dazwischenliegenden Zapfen (15) auf den Deckel (8) übertragen werden, während die Befestigungsvorrichtungen (12) den resultierten Querkräften praktisch nicht unterworfen sind.

2. Zugblock nach Anspruch 1, <u>dadurch gekennzeichnet</u>, daß die Zapfen (15) und die Aussparungen (16) des Deckels konisch sind und daß der Deckel hinsichtlich des Gehäuses (1) aufklappbar ist.

3. Zugblock nach Anspruch 1 oder 2, bei dem die Grundplatte (2) des Gehäuses (1) aus einer Platte besteht und die seitlichen Schenkel (3) des Gehäuses durch zwei Stützblöcke gebildet sind, <u>dadurch</u> <u>gekennzeichnet</u>, daß die Stützblöcke (3) an der Platte (2) des Gehäuses (1) mit Bolzen (q) befestigt sind, die von den Befestigungsvorrichtungen (12), die den Deckel (8) am Gehäuse (1) befestigen, getrennt sind.

4. Zugblock nach Anspruch 3, <u>dadurch gekennzeichnet</u>, daß die Zapfen (15) durch die Köpfe der Bolzen (9) zur Befestigung der Stützblöcke (3) an der Platte (2) des Gehäuses (1) gebildet sind.

## Claims

1. A traction block for a linear winch, comprising an elongate frame (1) with a U-shaped transverse section, having a plane core (2) and two lateral wings (3) with clearance from and perpendicular to the core, two elongate clamping blocks (5) movably mounted between the lateral wings of the frame in such a manner that a relative longitudinal movement between each movable clamping block and the adjacent wing of the frame causes a considered movement of the clamping block in a transverse direction perpendicular to the wings in order to tighten or slacken, in the direction of the said relative longitudinal movement, a cable, a rod or other traction device (7), a flat cover (12) parallel to the core (2) of the frame, and securing means (12) to secure in a detachable manner the cover (8) to the frame (1), the said lateral wings (3) of the frame being subjected to transverse reaction forces which serve co separate the wings from one another and which are transmitted to the cover when, during operation, the clamping blocks (5) tighten the said traction device (7), characterised in that the lateral wings (3) of the frame (1) are provided with pegs (15) which project on their end faces facing the cover (8) perpendicularly to the latter and which are tightly enclosed in corresponding cavities (16) of the cover (8) via the said pegs (15), whereas the securing means (12) are practically not subjected to any stress due to the said transverse reaction forces.

2. A traction block according to claim 1, characterised in that the pegs (15) and the cavities (16) of the cover (8) are conical and in that the cover is hinged with respect to the frame (1).

3. A traction block according to claim 1 or 2, in which the core (2) of the frame (1) is formed by a plate and the lateral wings (3) of the frame are formed by two support blocks, characterised in that the support blocks (3) are secured to the plate (2) of the frame (1) by bolts (9) which differ from the securing means (12) securing the cover (8) to the frame (1).

4. A traction block according to claim 3, characterised in that the pegs (15) are formed by the heads of the bolts (9) for securing the support blocks (3) to the plate (2) of the frame (1).

Fig.1

Fig.2

Fig.4

# Fig.3